# EUROPÄISCHE PATENTANMELDUNG

(11) **EP 0 760 455 A2**
(43) Veröffentlichungstag der Anmeldung: **05.03.1997**
(21) Anmeldenummer: 96112592.9
(22) Anmeldetag: 03.08.1996
(51) Int. Cl.: F26B 21/08

(54) **Vorrichtung mit mindestens einem Vorratsbehälter für zu behandelndes Gut, vorzugsweise Kunststoffgranulat**

(30) Priorität: 26.08.1995 DE 19531446
(71) Anmelder: Motan Holding GmbH, D-78467 Konstanz (DE)
(72) Erfinder: Höller, Klaus, 78464 Konstanz (DE); Nowak, Manfred, 88090 Immenstaad (DE)
(74) Vertreter: Jackisch-Kohl, Anna-Katharina

(57) **Zusammenfassung**

An den Vorratsbehälter (2) ist eine Zuführleitung (3) und eine Rückleitung (3) für Prozeßluft angeschlossen. Die Vorrichtung hat eine Heizeinrichtung (24) für die Prozeßluft sowie ein Gebläse (10). Damit zur gezielten Einstellung auf definierte Restfeuchten des Gutes (1) vorwählbare Taupunkttemperaturen zumindest annähernd konstant gehalten werden können, weist die Vorrichtung eine Steuerung (14) auf, der ein Lufttaupunkt-Sollwert zuführbar ist. An die Steuerung (14) ist eine Taupunkt-Meßeinrichtung (27) angeschlossen, die den Ist-Lufttaupunkt der Prozeßluft mißt und ein entsprechendes Istsignal an die Steuerung (14) abgibt. Sie regelt in Abhängigkeit von einem Soll-Ist-Wert-Vergleich der Lufttaupunkte ein Mischventil so, daß die Prozeßluft einen dem spezifischen restfeuchtigkeitsabhängigen Lufttaupunkt-Sollwert des zu behandelnden Gutes (1) entsprechenden Taupunkt aufweist. Mit dieser Vorrichtung kann der Taupunkt auf einem vorgegebenen Wert gehalten werden, unabhängig von der Prozeßdauer. Dadurch wird das zu behandelnde Gut (1) auf eine definierte Restfeuchte eingestellt, und zwar unabhängig davon, welche Anfangsfeuchte dieses Gut (1) hat.

## Beschreibung

Die Erfindung betrifft eine Vorrichtung mit mindestens einem Vorratsbehälter für zu behandelndes Gut, vorzugsweise für Kunststoffgranulat, nach dem Oberbegriff des Anspruches 1.

Für manche Anwendungsfälle in der Trockentechnik ist es notwendig, das Gut von einem Verarbeitungsprozeß auf einen bestimmten definierten Restfeuchtegehalt zu trocknen. Für ein Kunststoffgranulat kann beispielsweise eine minimale Restfeuchte von 0,01 % erreicht werden. Je nach Produktionsbedingungen des Kunststoffgranulates kann die Restfeuchte bei der Anlieferung beispielsweise zwischen 0,02 % und 1,8 % schwanken. Für die Verarbeitung des Kunststoffgranulates ist es aber notwendig, dieses auf eine Restfeuchte von beispielsweise exakt 0,05 % bis höchstens 0,06 % zu bringen, um in dem aus dem Kunststoffgranulat hergestellten Fertigteil bestimmte Materialeigenschaften zu erreichen.

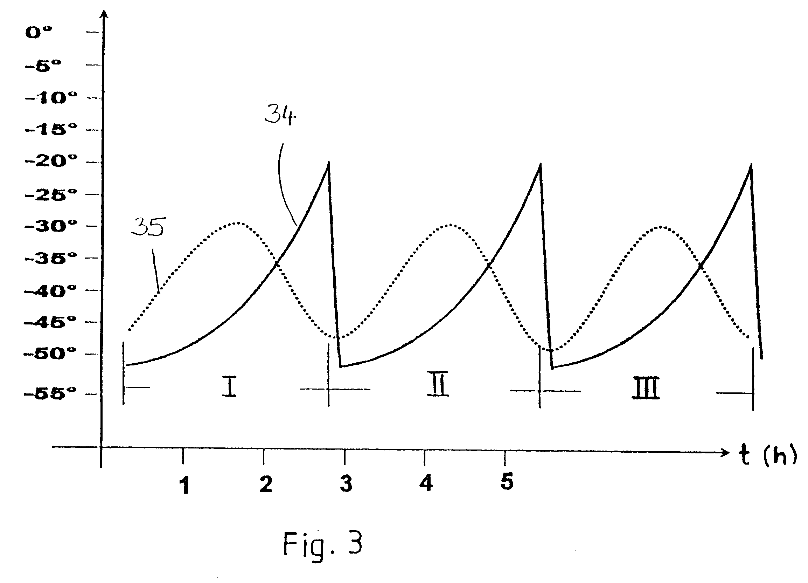

Bei den herkömmlichen Vorrichtungen wird die Prozeßluft mit Taupunkten von etwa -20°C bis -50°C erzeugt. Die Prozeßluft wird durch das zu behandelnde Gut geleitet, von dem sie Feuchtigkeit aufnimmt. Die aus dem Vorratsbehälter strömende Rückluft gelangt in eine Trockenmittelpatrone, welche die Feuchtigkeit aus der Prozeßluft aufnimmt, so daß wiederum trockene Prozeßluft dem Vorratsbehälter zugeführt werden kann. Der Taupunkt ist Schwankungen unterworfen, da die Trockenmittelpatrone über die Einsatzzeit, die meist etwa 2 bis 5 Stunden beträgt, gesättigt wird. Dadurch nimmt die Trockenleistung mit der Zeit ab. In Fig. 3 sind diese Verhältnisse in einem Diagramm dargestellt, in welchem der Taupunkt gegen die Trocknungszeit t aufgetragen ist. Zu Beginn des Trocknungsprozesses ist der Taupunkt sehr tief und liegt im dargestellten Ausführungsbeispiel unterhalb von -50°C. Mit zunehmender Behandlungs- bzw. Trocknungsdauer wird die Trocknungspatrone zunehmend mit Feuchtigkeit beladen, so daß sie immer weniger Feuchtigkeit der Prozeßluft entziehen kann. Die Folge hiervon ist die Zunahme des Taupunktes, bis die Trockenmittelpatrone gesättigt ist und ausgetauscht werden muß. Der Trockenmittelzyklus der ersten Trockenmittelpatrone ist in Fig. 3 mit I bezeichnet. Wird eine neue Trockenmittelpatrone eingesetzt, beginnt ein neuer Trockenzyklus II. Da die neue Trockenmittelpatrone noch keine Feuchtigkeit enthält, nimmt der Taupunkt schlagartig ab und liegt wieder sehr tief. Mit zunehmender Prozeßdauer steigt der Taupunkt erneut auf den systembedingten maximalen Taupunkt an, der meist bei etwa -20°C liegt. Bei Erreichen dieses maximalen Wertes wird die Trockenmittelpatrone wiederum gegen eine frisch regenerierte Trockenmittelpatrone ausgetauscht. Es beginnt ein erneuter Trockenzyklus III. Auf diese Weise ergibt sich in jedem Trockenprozeß eine von der Sättigung der Trockenmittelpatrone abhängige Taupunktkurve 34.

Man hat versucht, diese Kurve zu glätten. Dies ist in Fig. 3 durch die Kurve 35 dargestellt. In diesem Falle werden in das System sogenannte Trockenmitteldämpfer eingebaut, die als Molekularsiebpatronen ausgeführt sind. Dadurch verläuft die Taupunktkurve 35 glatter als die Taupunktkurve 34. Auch mit einer Mehrpatronentechnik kann die Schwankungsbreite des Taupunktes über die Prozeßdauer verringert werden.

Es ist auch bekannt, mit Trockenmittelrädern einen kontinuierlich tiefen Taupunkt zu realisieren, der aber entsprechend der Feuchtigkeitsbelastung im System schwankt. So wurde bislang das zu behandelnde Gut Trockenluft mit möglichst tiefem Taupunkt über einen bestimmten Zeitraum hinweg ausgesetzt, um einen möglichst geringe Restfeuchte zu erreichen. Da die Anfangsfeuchte des Gutes jedoch schwankt, kann mit dieser Trockentechnik keine Abhilfe geschaffen werden. Aus diesem Grunde werden die Trocknungsparameter auf den schlechtest möglichen Fall eingestellt, was jedoch bei guten Trocknungsverhältnissen zu einer Übertrocknung des Gutes führen kann. Dies führt zu einer Verschlechterung der Verarbeitungsparameter und der Materialeigenschaften.

Der Erfindung liegt die Aufgabe zugrunde, die gattungsgemäße Vorrichtung so auszubilden, daß zur gezielten Einstellung auf definierte Restfeuchten des Gutes vorwählbare Taupunkttemperaturen zumindest annähernd konstant gehalten werden.

Diese Aufgabe wird bei der gattungsgemäßen Vorrichtung erfindungsgemäß mit den kennzeichnenden Merkmalen des Anspruches 1 gelöst.

Mit der Taupunkt-Meßeinrichtung der erfindungsgemäßen Vorrichtung wird der Ist-Lufttaupunkt der Prozeßluft gemessen und als entsprechendes Istsignal der Steuerung zugeführt. Sie vergleicht diesen Istwert mit einem vorgegebenen Sollwert des Taupunktes. Sind die beiden Werte nicht gleich, wird ein entsprechendes Regelsignal an das Mischventil gegeben, das dann so eingestellt wird, daß die Prozeßluft einen dem spezifischen restfeuchtigkeitsabhängigen Sollwert des Lufttaupunktes des zu behandelnden Gutes entsprechenden Taupunkt aufweist. Dadurch kann der Taupunkt auf einem vorgegebenen Wert gehalten werden, unabhängig von der Prozeßdauer. Dadurch wird das zu behandelnde Gut auf eine definierte Restfeuchte eingestellt, und zwar unabhängig davon, welche Anfangsfeuchte dieses Gut hat.

Soll das Gut getrocknet werden, wird vorteilhaft über das Mischventil die Prozeßluft in einem bestimmten Verhältnis von ungetrockneter und getrockneter Luft zu mindestens einer Trockenmitteleinheit geleitet. Dadurch kann das zu trocknende Gut bei Konstanthaltung der vorwählbaren Taupunkttemperatur auf den spezifischen restfeuchtigkeitsabhängigen Sollwert des Lufttaupunktes eingestellt werden.

Weist das Gut eine zu geringe Feuchtigkeit auf, kann über ein weiteres Mischventil der Prozeßluft, die aus getrockneter und ungetrockneter Luft in einem bestimmten Mischverhältnis besteht, feuchte Umgebungsluft zugemischt werden. Dadurch kann auch bei zu trockenem Gut unter Konstanthaltung von vorwählbaren Taupunkttemperaturen eine definierte Restfeuchte des Gutes erreicht werden.

Vorteilhaft ist es, der Prozeßluft für das zu befeuchtende Gut über wenigstens eine Befeuchtungseinheit die fehlende Feuchtigkeit zuzuführen.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine erfindungsgemäße Vorrichtung zur Kontanthaltung von vorwählbaren Taupunkttemperaturen,
- Fig. 2: in einem Diagramm beispielhafte Einstellungskurven für Kunststoffgranulate auf definierte Restfeuchtgehalte,
- Fig. 3: in einem Diagramm die Schwankungsbreite von Trockenlufttaupunkten in herkömmlichen Trocknungsanlagen.

Die Vorrichtung dient dazu, vorwählbare Taupunkttemperaturen zumindest annähernd konstant zu halten, um zu trocknendes Gut auf einen definierten Restfeuchtegehalt gezielt einstellen zu können. Das zu trocknende Gut 1, vorzugsweise Kunststoffgranulat, ist in zwei Trocknungstrichtern 2 gelagert. Die Vorrichtung kann auch nur einen oder auch weitere Trocknungstrichter enthalten. In die Trocknungstrichter ragt jeweils eine Trockenluftleitung 3, die innerhalb des Trocknungstrichters 2 nach unten in Richtung auf den Boden des Trocknungstrichters 2 verläuft. Die Trockenluftleitung 3 endet in bekannter Weise nahe dem Boden des Trocknungstrichters 2, so daß die aus der Trockenluftleitung 3 austretende Trockenluft durch das zu trocknende Gut 1 nach oben steigt. In den oberen Bereich jedes Trocknungstrichters 2 ragt eine Rückführleitung 4, welche die mit Feuchtigkeit beladene Luft aus dem jeweiligen Trocknungstrichter 2 herausführt. Die beiden Rückführleitungen 4 gehen in eine gemeinsame Rückleitung 5 über. Sie schließt an ein Außenluftmischventil 6 an, an das eine Zuleitung 7 angeschlossen ist. Sie führt in einen Trockenlufterzeuger 8, in dem zwei Trocknerpatronen 9, vorzugsweise Molekularsiebe, angeordnet sind. Je nach Auslegung der Vorrichtung kann der Trockenlufterzeuger 8 auch nur eine Trocknerpatrone oder weitere Trocknerpatronen enthalten.

In der Zuleitung 7 sitzt ein Gebläse 10, das vorzugsweise innerhalb des Trockenlufterzeugers 8 angeordnet ist. Das Gebläse 10 kann selbstverständlich auch außerhalb des Trockenlufterzeugers 8 vorgesehen sein. Auf der Druckseite des Gebläses 10 befindet sich innerhalb des Trockenlufterzeugers 8 ein Mischventil 11, das durch ein Stellglied 12 verstellt werden kann. Auch das Außenluftmischventil 6 ist mit einem Stellglied 13 versehen. Beide Stellglieder 12, 13 sind an eine Steuerung 14 angeschlossen, mit der in noch zu beschreibender Weise die Mischventile 6, 11 in gewünschtem Maße verstellt werden.

An das Mischventil 11 schließt eine Zuführleitung 15 an, die das Mischventil 11 mit der einen Trocknerpatrone 9 verbindet. Von der Zuführleitung 15 zweigt eine weitere Zuführleitung 15' ab, die zur anderen Trocknerpatrone 9 führt.

Vor und hinter jeder Trocknerpatrone 9 ist jeweils ein Schaltventil 16 bis 19 vorgesehen. Die auf gleicher Seite der Trocknerpatronen 9 sitzenden Schaltventile 16 und 17 sowie 18 und 19 sind über eine Leitung 20 bzw. 21 miteinander verbunden. Sie sind Teil eines Heizkreislaufes 22, der innerhalb des Trockenlufterzeugers 8 vorgesehen ist und mit dem die Trockenluft gegebenenfalls erwärmt werden kann. Hierzu sitzt im Kreislauf 22 ein Gebläse 23, dem druckseitig eine Heizeinrichtung 24 nachgeschaltet ist.

Die beiden Schaltventile 16 und 17 sind an die Trockenluftleitung 3 angeschlossen. Innerhalb des Trockenlufterzeugers 8 ist diese Trockenluftleitung 3 über eine Zwischenleitung 25 mit dem Mischventil 11 verbunden.

In der Trockenluftleitung 3 sitzen innerhalb des Trockenlufterzeugers 8 eine Befeuchtungseinheit 26 sowie eine in Strömungsrichtung nachgeschaltete Taupunktmeßeinrichtung 27. Die Befeuchtungseinheit 26 und die Taupunktmeßeinrichtung 27 sind an die Steuerung 14 angeschlossen.

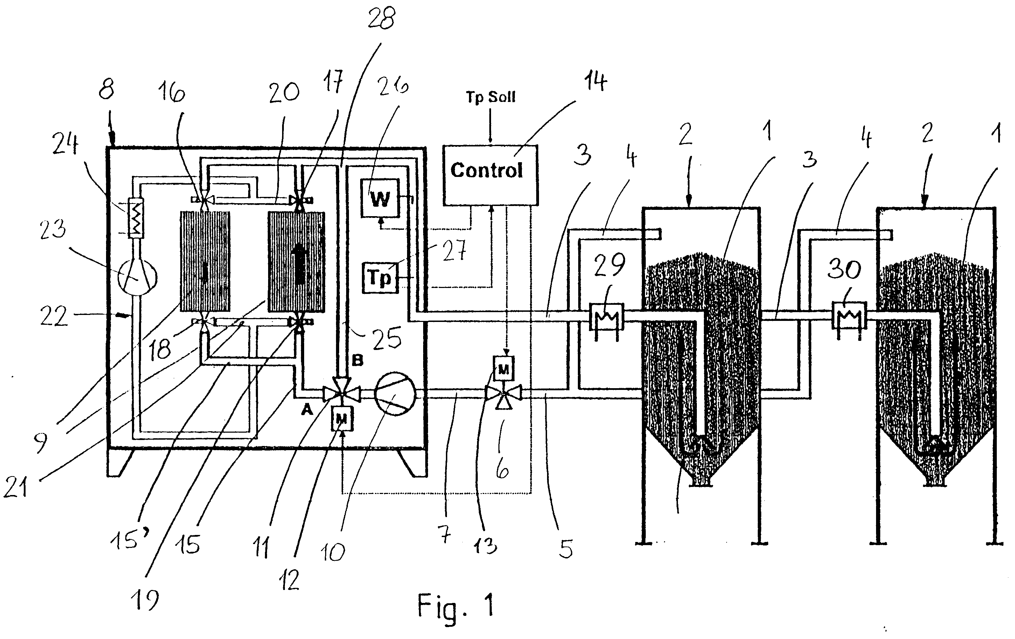

Die über die Rückführleitungen 4 aus den Trocknungstrichtern 2 herausgeführte, mit Feuchtigkeit beladene Trockenluft wird über die Rückleitung 5 dem Mischventil 11 zugeführt. Es ist, über die Steuerung 14 gesteuert, so eingestellt, daß ein Teil der mit Feuchtigkeit beladenen Rückluft über die Zuführleitung 15 der in Fig. 1 rechten Trocknerpatrone 9 zugeführt wird, während ein anderer Teil der Rückluft über die Zwischenleitung 25 ungetrocknet zu einer Mischstelle 28 gelangt, die durch den Anschlußbereich der Zwischenleitung 25 an die Trockenluftleitung 3 gebildet wird. Der durch die Zuführleitung 15 strömende Anteil der Rückluft wird beim Durchgang durch die Trocknerpatrone 9 in bekannter Weise getrocknet und gelangt über das Schaltventil 17 in die Trockenluftleitung 3. In Fig. 1 wird der durch die Trocknerpatrone 9 strömende Anteil der Rückluft mit A und der ungetrocknet durch die Zwischenleitung 25 strömende Anteil der Rückluft mit B bezeichnet. An der Mischstelle 28 wird der beim Durchlauf durch die Trocknerpatrone 9 getrocknete Rückluftanteil A mit dem ungetrockneten Rückluftanteil B gemischt. Die so gebildete Trockenluft strömt über die Trockenluftleitung 3 den Trocknungstrichtern 2 zu. In Strömungsrichtung vor den Trocknungstrichtern 2 befindet sich in den Trockenluftleitungen 3 jeweils eine Heizeinrichtung 29, 30, mit denen die Trockenluft gegebenenfalls vor dem Eintritt in die Trocknungstrichter 2 erwärmt werden kann.

Die im Mischungsverhältnis A/B gebildete Trockenluft strömt an der Taupunktmeßeinrichtung 27 vorbei, welche den Lufttaupunkt der Trockenluft in Strömungsrichtung hinter der Mischstelle 28 mißt. Die Meßeinrichtung 27 sendet ein entsprechendes Meßsignal an die Steuerung 14, welche diesen Ist-Lufttaupunkt mit einem in die Steuerung eingegebenen Soll-Lufttaupunkt vergleicht. Je nach Meßergebnis wird über das Stellglied 12 das Mischventil 11 eingestellt. Die Trockenluft durchströmt nach dem Austritt aus den Trockenluftleitungen 3 das zu trocknende und auf eine bestimmte Restfeuchte einzustellende Gut 1 von unten nach oben und wird über die Rückführleitungen 4 wieder dem Trockenlufterzeuger 8 zugeführt.

Unterschreitet die Trockenluft in Strömungsrichtung hinter der Mischstelle 28 den vorgegebenen Sollwert der Taupunkttemperatur, sendet die Steuerung 14 ein entsprechendes Regelsignal an das Stellglied 12, welches das Mischventil 11 so einstellt, daß der Rückstromanteil B, der ungetrocknet durch die Zwischenleitung 25 strömt, erhöht wird. Entsprechend wird der Rückstromanteil A, der durch die Trocknerpatrone 9 strömt, verringert. Aufgrund der beschriebenen Änderung des Mischungsverhältnisses von getrockneter und ungetrockneter Rückluft wird die Taupunkttemperatur erhöht. Mit der Taupunkt-Meßeinrichtung 27 wird ständig die Taupunkttemperatur gemessen, so daß über die Steuerung 14 automatisch die gewünschte Taupunkttemperatur geregelt wird.

Überschreitet die Taupunkttemperatur der Trockenluft an der Mischstelle 28 hingegen den vorgegebenen Sollwert der Taupunkttemperatur, wird das Stellglied 12 des Mischventiles 11 so verstellt, daß die Zufuhr der ungetrockneten Rückluft in die Zwischenleitung 25 gedrosselt und der Durchfluß der zu trocknenden Luft in die Zuführleitung 15 erhöht wird. An der Mischstelle 28 ergibt sich somit ein zugunsten der getrockneten Luft erhöhtes Mischungsverhältnis, wodurch die Taupunkttemperatur abgesenkt wird.

Solange die den Trocknungstrichtern 2 zugeführte Trockenluft die geforderte Soll-Taupunkttemperatur aufweist, bleibt das Mischventil 11 in der jeweils eingestellten Stellung. Infolge des beschriebenen Regelkreises wird die Taupunkttemperatur kontinuierlich und selbsttätig überwacht und entsprechend der der Steuerung 14 vorgegebenen Soll-Taupunkttemperatur geregelt.

Mit der Befeuchtungseinheit 26 können besonders hohe Taupunkttemperaturen konstant erzeugt werden. Die Befeuchtungseinheit 26 ist vorzugsweise zwischen dem Mischventil 11 und der Taupunktmeßeinrichtung 27 angeordnet. Sie kann selbstverständlich auch an einer anderen geeigneten Stelle vorgesehen werden, beispielsweise in der Rückführleitung 4, 5. Auch das Mischventil 11 kann an jeder anderen geeigneten Stelle angeordnet sein, zum Beispiel in der Zwischenleitung 25. Die Befeuchtungseinheit 26 kann als aktives Element in Verdampfertechnik oder auch in beliebiger anderer Art ausgeführt sein. So kann die Befeuchtungseinheit 26 so ausgebildet sein, daß über sie feuchte Außenluft zugeführt wird. Die Befeuchtungseinheit 26 wird aktiviert, wenn der Luftstrom über die Trocknerpatrone 9 vollständig gedrosselt ist und der Taupunkt der Luft noch nicht hoch genug ist. Dann erhält die Befeuchtungseinheit 26 ein entsprechendes Signal von der Steuerung 14. Die Steuerung 14 gibt außerdem ein entsprechendes Stellsignal an das Stellglied 13 ab, welches das Außenluftmischventil 6 so verstellt, daß mit Feuchtigkeit beladene Außenluft angesaugt wird. Aus diesem Grunde ist das Außenluftmischventil 6 vorteilhaft auf der Saugseite des Gebläses 10 angeordnet. Die Zugabe von Feuchtigkeit wird wiederum in Abhängigkeit vom Sollwert der Taupunkttemperatur in der Steuerung 14 geregelt. Auf diese Weise läßt sich sehr einfach ein bestimmter Feuchtigkeitsgehalt in der Trockenluft einstellen.

Es ist auch möglich, nur die Befeuchtungseinheit 26 oder nur das Außenluftmischventil 6 zu betätigen. So kann ausschließlich über die Befeuchtungseinheit 26 die notwendige Feuchte der Trockenluft zugeführt werden. Wird lediglich das Außenluftmischventil 6 betätigt, wird nur feuchte Außenluft mit dem Gebläse 10 angesaugt und der Trockenluft zugeführt.

Die auf einen bestimmten Taupunkt eingestellte Trockenluft wird über die Trockenluftleitung 3 den Trocknungstrichtern 2 zugeführt. Die Trocknungstemperatur wird über die jeweilige Heizeinrichtung 29, 30 eingestellt.

Das Gebläse 10, das vorzugsweise im Trockenlufterzeuger 8 angeordnet ist, wird im geschlossenen oder offenen Kreislauf mit einem definierten Volumenstrom aufrechterhalten. Im Trocknungstrichter 2 sind auf diese Weise konstante Verhältnisse in bezug auf Temperatur, Taupunkt und Luftvolumenstrom gegeben, wodurch das zu trocknende Gut 1 einen definierten Restfeuchtegehalt erhält.

Über den Heizkreislauf 22, der ein Regenerierkreislauf ist, können die Trocknerpatronen 9 in bekannter Weise bei Erreichen eines bestimmten Sättigungsgrades wieder getrocknet werden. Es ist hierbei auch möglich, eine der beiden Trocknerpatronen 9 über den Regenerierkreislauf 22 zu regenerieren, während die andere Trocknerpatrone 9 die aus den Trocknungstrichtern 2 kommende Luft von Feuchtigkeit befreit. Die Kreisläufe können dann so umgestellt werden, daß die andere Trocknerpatrone 9 nunmehr die Rückluft von Feuchtigkeit befreit, während die nunmehr gesättigte Trocknerpatrone in den Regenerierkreislauf 22 geschaltet und regeneriert wird.

Über das beschriebene Mischungsverhältnis A/B von getrockneter und ungetrockneter Rückluft läßt sich sehr einfach eine gewünschte Taupunkttemperatur einstellen. Das Gut 1 wird nicht, wie bisher, auf minimale, sondern auf für die Verarbeitung optimale Restfeuchten gebracht. Dadurch wird auch weniger Feuchtigkeit bzw. Wasser in den Kreislauf gegeben. Die Wasseraufnahme in den Trocknerpatronen 9 ist dadurch gering, bei der Rückfeuchtung von zu trockenem Gut 1 sogar nahezu Null. Auch wirken sich die in jedem System vorhandenen Leckagen nicht so stark auf, da die Wasserdampfdruckdifferenz zwischen dem geschlossenen System und der Umgebungsluft kleiner ist und dadurch die induzierte Wassermenge sinkt. Infolge der geringeren Wasseraufnahme der Trocknerpatronen 9 nimmt die Regenerierhäufigkeit ab, wodurch auch der Energiebedarf dieses Anlagenteiles erheblich verringert wird.

Mit der Vorrichtung ist eine optimale Qualitätssicherung gewährleistet. Infolge der konstanten Parameter im Trockenprozeß kann auch die Verarbeitungsqualität sichergestellt werden. Den Forderungen nach DIN ISO 9000 nach Protokollierung der Verarbeitungsparameter kann mit dieser Vorrichtung entsprochen werden, da die Taupunktwerte über die Steuerung 14 zugänglich sind.

Beim Ausführungsbeispiel nach Fig. 1 ist den beiden Trocknungstrichtern 2 die Einheit aus Mischventil 11, Zwischenleitung 25, Befeuchtungseinheit 26, Taupunkt-Meßeinrichtung 27 und Gebläse 10 gemeinsam zugeordnet. Dabei können auch weitere Trocknungstrichter 2 vorgesehen sein. Es ist aber auch möglich, jedem Trocknungstrichter 2 eine solche Einheit zuzuordnen. Es ist ferner möglich, die Einheit außerhalb des Trockenlufterzeugers 8 vorzusehen.

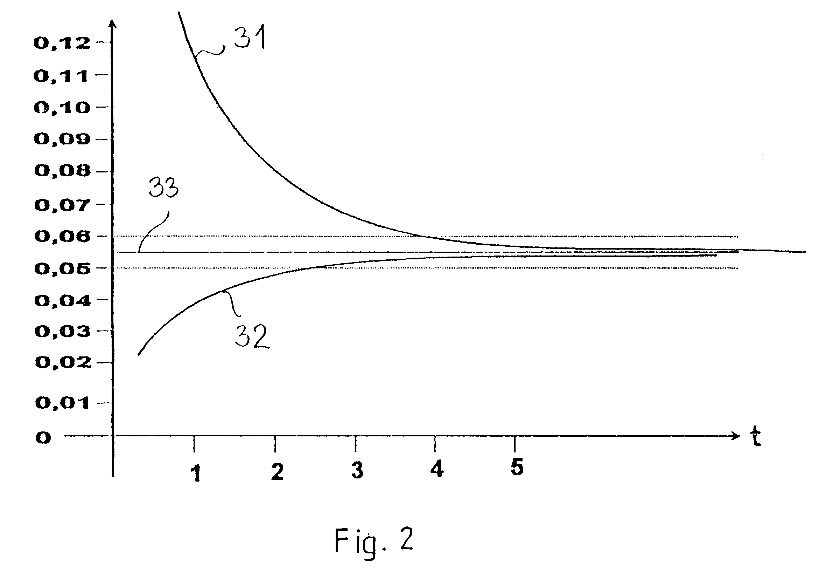

Fig. 2 zeigt anhand zweier Kurven die beiden Möglichkeiten, daß ein zu trockenes sowie ein zu feuchtes Gut behandelt wird, das jeweils auf einen vorgegebenen Sollwert hinsichtlich der Restfeuchte eingestellt werden soll. Die obere Kurve 31 gibt die Verhältnisse bei einem zu trocknenden Gut 1 an, das eine hohe Anfangsfeuchte bei Trocknungsbeginn hat. Die untere Kurve 32 entspricht einem zu trocknenden Gut 1, das zu Beginn eine zu geringe Anfangsfeuchte aufweist. Beide Arten von Gut 1 sollen auf einen vorgegebenen Sollwert 33 hinsichtlich des Restfeuchtegehaltes eingestellt werden. Im Diagramm gemäß Fig. 2 ist die Restfeuchte in Prozent gegen die Zeit t aufgetragen. Beide Kurven 31, 32 zeigen, daß sich der Wassergehalt bzw. die Restfeuchte im Gut 1 asymptotisch über die Verweilzeit t im Trocknungstrichter 2 an den Wassergehalt der Luft anpaßt. Das zu trocknende Gut 1 paßt sich stets seinen Umgebungsverhältnissen an, welche durch die Temperatur und den Wassergehalt bzw. durch die Taupunkttemperatur charakterisiert sind. Der Dampfdruck in der Luft und im zu trocknenden Gut 1 ist bestrebt, einen Gleichgewichtszustand herzustellen. Diese Umgebungsverhältnisse sind nur aufrechtzuerhalten, wenn die Luft durch das Gebläse 10 ständig im Umlauf gehalten wird und dadurch die Parameter im gesamten Trockenraum möglichst gleichmäßig sind. Soll das zu trocknende Gut eine bestimmte Restfeuchte enthalten, ist ein konstantes Umgebungsverhältnis (konstante Temperatur mit dem dazu gehörenden konstanten Lufttaupunkt) zu schaffen, der im Gleichgewichtszustand die gewünschte Restfeuchte im Gut 1 ergibt. Mit der beschriebenen Vorrichtung läßt sich der Restfeuchtegehalt einfach und genau einstellen.

## Patentansprüche

1. Vorrichtung mit mindestens einem Vorratsbehälter für zu behandelndes Gut, vorzugsweise Kunststoffgranulat, an den mindestens eine Zuführleitung und wenigstens eine Rückleitung für Prozeßluft angeschlossen sind, mit wenigstens einer Heizeinrichtung für die Prozeßluft und wenigstens einem Gebläse,
dadurch gekennzeichnet, daß die Vorrichtung eine Steuerung (14) aufweist, der ein Lufttaupunkt-Sollwert zuführbar ist, und daß an die Steuerung (14) mindestens eine Taupunkt-Meßeinrichtung (27) angeschlossen ist, die den Ist-Lufttaupunkt der Prozeßluft mißt und ein entsprechendes Istsignal an die Steuerung (14) abgibt, die in Abhängigkeit von einem Soll-Ist-Wert-Vergleich der Lufttaupunkte ein Mischventil (11) so regelt, daß die Prozeßluft einen dem spezifischen restfeuchtigkeitsabhängigen Lufttaupunkt-Sollwert des zu behandelnden Gutes (1) entsprechenden Taupunkt aufweist.

2. Vorrichtung nach Anspruch 1,
dadurch gekennzeichnet, daß das Mischventil (11) in der Rückleitung (4, 5) sitzt.

3. Vorrichtung nach Anspruch 1 oder 2,
dadurch gekennzeichnet, daß an das Mischventil (11) eine Zwischenleitung (25) angeschlossen ist, die in die Zuführleitung (3) mündet.

4. Vorrichtung nach einem der Ansprüche 1 bis 3,
dadurch gekennzeichnet, daß die Rückleitung (4, 5) an mindestens eine Trockenmitteleinheit (9) angeschlossen ist.

5. Vorrichtung nach Anspruch 3 oder 4,
dadurch gekennzeichnet, daß der Mündungsbereich der Zwischenleitung (25) in die Zuführleitung (3) eine Mischstelle (28) bildet, an der ungetrocknete und in der Trockenmitteleinheit (9) getrocknete Luft zur Prozeßluft gemischt werden.

6. Vorrichtung nach Anspruch 5,
dadurch gekennzeichnet, daß zum Trocknen des Gutes (1) das Mischventil (11) durch die Steuerung (14) so einstellbar ist, daß die vom Vorratsbehälter (2) kommende Rückluft in die Zwischenleitung (25) und zur Trockenmitteleinheit (9) in einem solchen Verhältnis gelangt, daß die Prozeßluft einen Ist-Lufttaupunkt aufweist, der dem Soll-Lufttaupunkt zumindest annähernd entspricht.

7. Vorrichtung nach einem der Ansprüche 1 bis 6,
dadurch gekennzeichnet, daß in der Rückleitung (4, 5) mindestens ein weiteres Mischventil (6) sitzt, das mit der Steuerung (14) verbunden ist.

8. Vorrichtung nach Anspruch 7,
dadurch gekennzeichnet, daß das weitere Mischventil (6) auf der Saugseite des Gebläses (10) angeordnet ist.

9. Vorrichtung nach Anspruch 7 oder 8,
dadurch gekennzeichnet, daß zum Befeuchten des Gutes (1) das weitere Mischventil (6) so einstellbar ist, daß der Prozeßluft feuchte Außenluft zumischbar ist.

10. Vorrichtung nach einem der Ansprüche 1 bis 9,
dadurch gekennzeichnet, daß die Vorrichtung mindestens eine Befeuchtungseinheit (26) aufweist.

11. Vorrichtung nach Anspruch 10,
dadurch gekennzeichnet, daß die Befeuchtungseinheit (26) der Zuführleitung (3) zugeordnet ist.

12. Vorrichtung nach Anspruch 10 oder 11,
dadurch gekennzeichnet, daß die Befeuchtungseinheit (26) in Strömungsrichtung der Prozeßluft vor der Taupunkt-Meßeinrichtung (27) angeordnet ist.

13. Vorrichtung nach einem der Ansprüche 1 bis 12,
dadurch gekennzeichnet, daß die Einheit aus Mischventil (11), Zwischenleitung (25), Befeuchtungseinheit (26), Taupunkt-Meßeinrichtung (27) und Gebläse (10) bei mehreren Vorratsbehältern (2) jedem einzelnen Vorratsbehälter (2) zugeordnet ist.

14. Vorrichtung nach einem der Ansprüche 1 bis 12,
dadurch gekennzeichnet, daß die Einheit aus Mischventil (11), Zwischenleitung (25), Befeuchtungseinheit (26), Taupunkt-Meßeinrichtung (27) und Gebläse (10) einer aus mehreren Vorratsbehältern (2) bestehenden Vorratsbehältergruppe zugeordnet ist.
